# EUROPÄISCHE PATENTSCHRIFT

(11) **EP 2 379 268 B1**
(45) Veröffentlichungstag und Bekanntmachung des Hinweises auf die Patenterteilung: **06.06.2018**
(21) Anmeldenummer: 09795705.4
(22) Anmeldetag: 15.12.2009
(51) Int. Cl.: B23D 77/04, B23B 27/16

(54) **REIBAHLE, MESSERPLATTEN DAFÜR UND VERFAHREN ZUM EINSTELLEN DES BEARBEITUNGSDURCHMESSERS EINER SOLCHEN REIBAHLE**
REAMER, CUTTER PLATES THEREFOR AND METHOD FOR ADJUSTING THE MACHINING DIAMETER OF A REAMER OF THIS TYPE
ALÉSOIR, PLAQUETTES DE COUPE POUR CET ALÉSOIR ET PROCÉDÉ DE RÉGLAGE DU DIAMÈTRE D'USINAGE DE CET ALÉSOIR

(30) Priorität: 19.12.2008 DE 102008064543
(43) Veröffentlichungstag der Anmeldung: 26.10.2011
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Gleiss, Alf-Olav
(86) Internationale Anmeldenummer: PCT/EP2009/008960
(87) Internationale Veröffentlichungsnummer: WO 2010/069541

(56) Entgegenhaltungen:
- EP-A1- 0 361 031
- EP-A1- 0 631 835
- EP-A1- 0 803 306
- WO-A1-01/58626
- WO-A1-88/08767
- WO-A1-2005/107987
- WO-A1-2008/017383
- WO-A2-2005/105355
- WO-A2-2007/127109
- DE-A1- 1 602 817
- DE-A1- 3 733 637
- DE-A1- 4 330 988
- DE-A1- 19 601 666
- DE-A1- 19 854 873
- GB-A- 2 110 129
- JP-A- 2000 246 543
- US-A- 5 454 667
- US-A1- 2003 086 766

## Beschreibung

Die Erfindung betrifft eine Reibahle gemäß Oberbegriff des Anspruchs 1, eine Messerplatte gemäß Oberbegriff des Anspruchs 10 sowie ein Verfahren zum Einstellen des Bearbeitungsdurchmessers der Reibahle, gemäß Anspruch 15.

Eine derartige Reibahle geht aus der EP 0 803 306 A1 hervor und eine derartige Messerplatte geht beispielsweise aus der WO 01/58626 A1 hervor. Aus DE 10 2004 022 941 A1 gehen eine Reibahle und Messerplatten der hier angesprochenen Art hervor. Die zur Feinbearbeitung von Durchgangsbohrungen oder Sacklochbohrungen dienende Reibahle weist einen Grundkörper auf, der an seiner Außenumfangsfläche mit einer zur Stirnseite der Reibahle hin randoffenen Ausnehmung in Form einer Nut versehen ist. Diese dient zur Aufnahme einer mehrere geometrisch bestimmte Schneiden aufweisenden Messerplatte. Die Nut weist an ihrem der Reibahlenstirnseite abgewandten Ende eine erste Seitenfläche und eine weitere, zweite Seitenfläche auf, welche in Richtung der Längsmittelachse der Reibahle verläuft. Zur Fixierung der in die Nut eingesetzten Messerplatte ist eine Spanneinrichtung vorgesehen. Die Reibahle umfasst ferner eine Justiereinrichtung mit einem in Anlage mit der Messerplatte bringbaren Justierteil, mittels dessen der radiale Überstand der Messerplatte über die Umfangsfläche des Grundkörpers oder - sofern vorgesehen - über Führungsleisten und damit der Bearbeitungsdurchmesser der Reibahle eingestellt wird.

Die bekannte Messerplatte weist eine in Vorschubrichtung der Reibahle geneigte Haupt- und eine in entgegengesetzter Richtung abfallende Nebenschneide auf. Die mittels der Justiereinrichtung einstellbare Verjüngung der Nebenschneide bei der in der Nut eingesetzten Messerplatte liegt üblicherweise im Bereich von einem Mikrometer (µm) pro Millimeter (mm), was einer Winkelabweichung der Nebenschneide zur Werkzeugachse von 0,057° entspricht.

Bei der bekannten Reibahle liegt die Messerplatte an ihrem der Reibahlenstirnseite entfernten Endbereich direkt am als Widerlager dienenden Nutgrund an und an ihrem der Reibahlenstirnseite zugewandten Ende auf dem Justierteil auf. Mittels der Spanneinrichtung wird die Messerplatte sowohl an den Grund als auch an die zweite Seitenfläche der Nut angepresst und dadurch fixiert. Bei einer Einstellung des Bearbeitungsdurchmessers der Reibahle durch Verstellung des Justierteils wird die Messerplatte um ihre am Nutgrund anliegende Randkante verschwenkt, was zwangsläufig zu einer nicht in allen Fällen gewünschten Änderung der Verjüngung führt. Ein für die jeweiligen Anforderungen optimaler Wert der Verjüngung ist daher nicht in allen Fällen erreichbar.

Es ist daher Aufgabe der Erfindung, eine Reibahle der eingangs genannten Art zu schaffen, bei der in einfacher Weise eine vom jeweils eingestellten Bearbeitungsdurchmesser unabhängig festlegbare Verjüngung realisierbar ist. Aufgabe der Erfindung ist auch die Bereitstellung mindestens einer für den Einsatz in der Reibahle geeigneten Messerplatte. Aufgabe ist es ferner, ein vereinfachtes Verfahren zur Einstellung des Bearbeitungsdurchmessers der Reibahle bei gleichzeitiger Sicherstellung einer definierten Verjüngung anzugeben.

Zur Lösung dieser Aufgabe wird eine Reibahle mit den Merkmalen des Anspruchs 1 vorgeschlagen. Diese umfasst einen Grundkörper, welcher mit mindestens einem Plattensitz versehen ist, wobei der Plattensitz erste und zweite Seitenflächen aufweist. Des Weiteren ist eine mindestens eine Nebenschneide aufweisende Messerplatte in den Plattensitz eingesetzt. Zur sicheren und präzisen Befestigung der Messerplatte sind eine eine Spannpratze aufweisende Spanneinrichtung und zur präzisen und vorzugsweise einfachen Einstellung des Bearbeitungsdurchmessers der Reibahle eine ein Justierteil aufweisende Justiereinrichtung vorgesehen. Die Reibahle zeichnet sich dadurch aus, dass die erste Plattensitzseitenfläche gegenüber einer gedachten Vertikalen so geneigt ist, dass die Messerplatte durch Anlage an der Seitenfläche so ausrichtbar ist, dass deren Nebenschneide eine bestimmte Verjüngung aufweist, dass im Grund des Plattensitzes eine Öffnung vorgesehen ist, durch welche das Justierteil in den Plattensitz hineinragt, und dass die Messerplatte auf ihrer dem Justierteil zugewandten Seite - vorzugsweise ausschließlich - an diesem anliegt. Aufgrund dieser Ausgestaltung wird sichergestellt, dass beim Einsetzen der Messerplatte in den Plattensitz eine durch die entsprechend geneigte erste Seitenfläche durch Anlage der Messerplatte an dieser eine selbsttätige Ausrichtung der Messerplatte erfolgt, dergestalt, dass die einstellbare, mindestens eine Schneide eine exakte, praktisch nicht veränderbare Verjüngung aufweist.

Die schräg zur oder entgegen der Reibahlenstirnseite verlaufende erste Seitenfläche dient bei der Justierung der Messerplatte, das heißt bei der Einstellung des Bearbeitungsdurchmessers, vorzugsweise als Führung, insbesondere als Zwangsführung, der daran anliegenden, von unten her mittels des auch als Auflage für die Messerplatte dienenden Justierteils verschiebbaren Messerplatte. Diese wird daher bei ihrer radialen Verschiebung zum Zwecke der Einstellung des Schneidenüberstandes über die Reibahlenumfangsfläche beziehungsweise über gegebenenfalls vorgesehene Führungsleisten nicht um eine in Querrichtung zur Längsmittelachse der Reibahle verlaufende Achse verkippt, wie bei der bekannten Reibahle, was zunächst einmal eine Veränderung der Verjüngung zur Folge hätte. Vielmehr wird die Messerplatte entlang der ersten Plattensitzseitenfläche - vorzugsweise ausschließlich - translatorisch unter Beibehaltung des präzisen, durch die Anordnung und Ausgestaltung der ersten Seitenfläche festgelegten Verjüngungswinkels der Nebenschneide geführt und dabei relativ zum Reibahlengrundkörper verlagert. Der Betrag dieser Linearbewegung ist mittels der Justiereinrichtung einstellbar, während der Verlauf der ersten Seitenfläche sowie die Anpassung der Messerplatte im Bereich ihrer Anlagekontaktfläche an der ersten Seitenfläche richtungsgebend sind.

Wichtig ist, dass die Messerplatte mit einer Seite an der ersten Seitenfläche des Plattensitzes anliegt, so dass bei einer Verstellung der Messerplatte mittels der Justiereinrichtung die Messerplatte entlang dieser ersten Seitenfläche des Plattensitzes gleitet. Die erste Plattensitzseitenfläche wirkt hierbei also als Führungsfläche, durch welche die daran anliegende Messerplatte bei einer Radialverstellung zur Einstellung des Überstands zwangsgeführt wird. Hierdurch wird sichergestellt, dass die Messerplatte nicht verkippt, wie es bei der bekannten Reibahle geschieht, sondern der Verjüngungswinkel konstant bleibt. Die Messerplatte weist also unabhängig von ihrer jeweiligen Radialposition, das heißt ihres Überstandes über die Umfangsfläche oder über die mindestens eine Führungsleiste der Reibahle, eine immer gleiche Verjüngung auf.

Als Verjüngung hat sich ein Mikrometer (µm) pro Millimeter (mm) Schneidenlänge als besonders vorteilhaft herausgestellt. Festzuhalten bleibt jedoch, dass auch andere Verjüngungen/Winkelabweichungen der Nebenschneide zur Werkzeugachse gewählt werden können, um so gezielt die Oberflächenbeschaffenheiten der mittels der Reibahle bearbeitenden Bohrungswand zu beeinflussen.

Im Zusammenhang mit der hier vorliegenden Erfindung wird unter dem Begriff "Verjüngung" in Verbindung mit der Reibahle die Durchmesserverkleinerung der Reibahle im Bereich ihres die Messerplatte aufweisenden Endes entgegen der Vorschubrichtung der Reibahle verstanden.

Unabhängig davon, welche Größe der Verjüngung gewählt wird, ist es sehr wichtig, dass der für die jeweiligen Anforderungen, beispielsweise hohe Oberflächengüte und/oder hohe Werkzeugstandzeiten, ausgewählte Sollwert sicher und zuverlässig eingehalten wird und weder beim Einstellen des Durchmessers noch im Einsatz der Reibahle sich verändert. Dies erfordert eine sichere und dauerhafte Verspannung von Messerplatte, Spanneinrichtung, Justiereinrichtung sowie Reibahlengrundkörper.

Dabei hat es sich bei einem Ausführungsbeispiel der Reibahle als vorteilhaft herausgestellt, dass die erste Seitenfläche des Plattensitzes einen Anschlag für die Messerplatte bildet, wobei die erste Seitenfläche am der Stirnseite der Reibahle abgewandten Ende des Plattensitzes vorgesehen ist. Die Messerplatte ist mittels der Spannpratze unter anderem gegen die erste Seitenfläche des Plattensitzes anpressbar, wobei die vorgegebene Neigung der ersten Seitenfläche, vorzugsweise entgegen der Reibahlenstirnseite, in Verbindung mit der Ausrichtung einer Spannnut in der Messerplatte dafür sorgt, dass die Spannpratze die Messerplatte quasi in den Plattensitz einzieht. Dies trägt in erheblichem Maße mit zu der gewünschten absolut sicheren Verspannung der miteinander zusammenwirkenden Teile der Reibahle im Bereich der Messerplatte bei.

Besonders bevorzugt wird ein Ausführungsbeispiel der Reibahle, bei dem die Justiereinrichtung und die Spanneinrichtung etwa gleich weit von der Stirnseite der Nut angeordnet sind. Dies ermöglicht eine äußerst kompakte Bauweise, die für das Gesamtsystem vorteilhaft ist. Eine platzsparende Anordnung ist beispielsweise dadurch realisierbar, dass die Spanneinrichtung und die Justiereinrichtung über die Umfangsfläche der Reibahle verteilt angeordnet sind, insbesondere sich zumindest im Wesentlichen beziehungsweise zum Großteil auf gegenüberliegenden Seiten einer sich entlang der Längsmittelachse der Reibahle aufspannenden Ebene befinden.

Um einen optimalen Halt der Messerplatte im Plattensitz zu erreichen, indem mittels der Spanneinrichtung eine Spann- beziehungsweise Klemmkraft auf die Messerplatte aufgebracht wird, umfasst die Spanneinrichtung eine Spannpratze mit einer in Anlage und/oder Eingriff bringbaren Spannlippe, wobei die Form der Spannlippe an die an der Messerplatte vorgesehenen Spannfläche angepasst ist. Die Anordnung und Ausgestaltung der Messerplatte und der einzelnen Komponenten der Spanneinrichtung sind so aneinander angepasst, dass die Spannpratze die Messerplatte mit einer Spann-/ Klemmkraft beaufschlagt, welche so gerichtet ist, dass eine erste Teilkomponente dieser Kraft entgegen der Vorschubrichtung der Reibahle in Richtung auf den durch die erste Seitenfläche gebildeten Anschlag, eine zweite Teilkraft in Richtung auf das Justierteil und eine dritte Teilkraft in Richtung auf die zweite Plattensitzseitenfläche wirkt.

Um auch bei hohen Spann-/Klemmkräften eine Beschädigung der Messerplatte zu vermeiden, ist die Spannlippe in Größe und Form sowie Anordnung relativ gegenüber der Messerplatte so an die mindestens eine daran vorgesehene Spannfläche angepasst, dass die Anlagekontaktfläche zwischen diesen beiden Teilen möglichst groß ist, wodurch die dort wirkende Flächenpressung entsprechend klein ist.

Weitere vorteilhafte Ausführungsbeispiele der Reibahle ergeben sich aus den Unteransprüchen.

Zur Lösung der Aufgabe wird auch eine mindestens eine geometrisch bestimmte Schneide aufweisende Messerplatte mit den Merkmalen des Anspruchs 10 vorgeschlagen. Diese weist eine eckige Grundform mit einer rechteckigen Vorderseite auf, welche mittels einer gedachten Mittellinie in zwei Hälften teilbar ist. Weiterhin ist eine mindestens eine Spannfläche aufweisende erste Spannnut vorgesehen, die um einen vorzugsweise spitzen Winkel gegenüber der Mittellinie der ersten Spannnut geneigt ist. Die Messerplatte zeichnet sich durch eine mindestens eine Spannfläche aufweisende zweite Spannnut aus, deren Mittelachse orthogonal zur Mittelachse der ersten Spannnut verläuft.

Vorteilhafte Ausführungsformen dieser Messerplatte ergeben sich aus den an Anspruch 10 anschließenden Unteransprüchen.

In einem nicht zur Erfindung gehörenden Beispiel weist eine Messerplatte mindestens eine Vertiefung mit einer darin vorgesehenen Spannfläche auf und zeichnet sich dadurch aus, dass im Grund der Vertiefung ein domartig hervorstehender, die Spannfläche aufweisender Spannkörper
angeordnet beziehungsweise ausgebildet ist. Aufgrund dieser Ausgestaltung kann bei entsprechender Anordnung der Vertiefung und des erhabenen Spannkörpers, insbesondere auch bei mittiger Positionierung auf der eckigen Messerplatte, der Angriffspunkt der Spannpratze näher an die aktive, vorzugsweise an einer Ecke der Messerplatte angeordneten Schneide liegen, wodurch auch kleinste Vibrationen der Messerplatte während des Schneidvorgangs noch besser vermieden werden können, als beispielsweise bei einer herkömmlichen Messerplatte. Das praktisch vibrationsfreie Spannen der Messerplatte bietet insbesondere beim Einsatz von PCBN (Polykristallines kubisches Bornitrid) als Schneidwerkstoff Vorteile bezüglich der Standzeit.

Zur Lösung der Aufgabe wird schließlich auch ein Justierverfahren gemäß Anspruch 15 für eine Reibahle nach einem der Ansprüche 1 bis 9 vorgeschlagen.

Im Folgenden wird die Erfindung anhand der Zeichnung näher erläutert. Dabei zeigen:
- Figur 1A: ein erstes Ausführungsbeispiel einer Messerplatte in Draufsicht;
- Figur 1B: eine Seitenansicht der Messerplatte gemäß Figur 1A;
- Figur 1C: eine perspektivische Darstellung der Messerplatte gemäß Figur 1A;
- Figur 2: in perspektivischer Darstellung ein Ausführungsbeispiel einer Reibahle mit einer Messerplatte nach den Figuren 1A bis 1C;
- Figur 3: die Reibahle gemäß Figur 2 in Seitenansicht;
- Figur 4: eine Querschnittsdarstellung der Reibahle nach den Figuren 2 und 3 im Bereich einer Justiereinrichtung;
- Figur 5: die Reibahle nach den Figuren 2 bis 4 mit Messerplatte gemäß einem zweiten Ausführungsbeispiel;
- Figur 6: eine Seitenansicht der Reibahle gemäß Figur 5;
- Figur 7A: eine Draufsicht auf ein Ausführungsbeispiel einer Spannpratze für die Messerplatte nach Figur 5;
- Figur 7B: eine Seitenansicht der Spannpratze gemäß Figur 7A;
- Figur 7C: in perspektivischer Darstellung die Spannpratze gemäß den Figuren 7A und 7B mit Blickrichtung von schräg unten;
- Figur 8: einen Ausschnitt der Messerplatte gemäß dem zweiten Ausführungsbeispiel in Schnittdarstellung und
- Figur 9: eine Draufsicht auf die Messerplatte gemäß Figur 8.

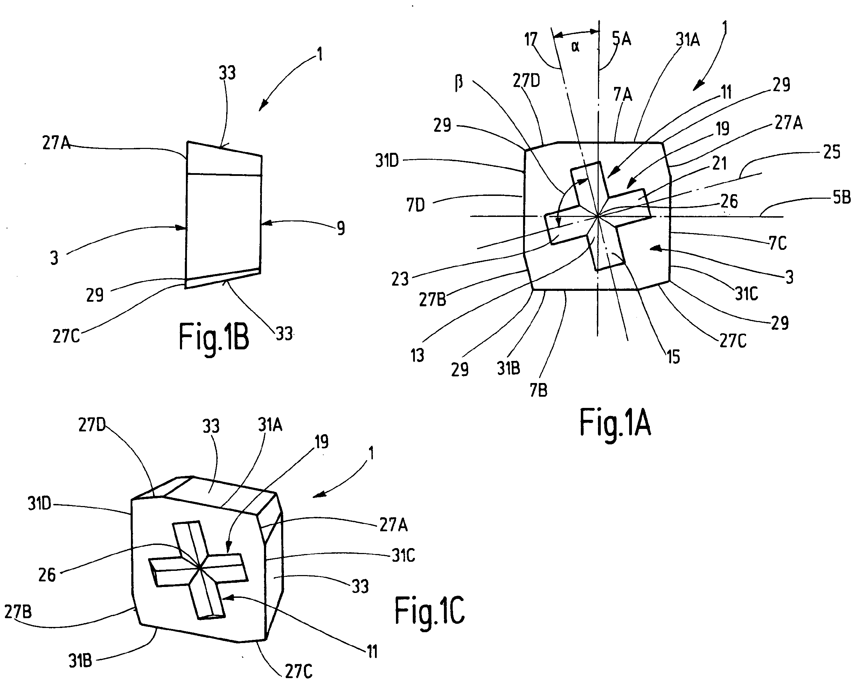

Figur 1A zeigt stark schematisiert ein Ausführungsbeispiel einer scheibenförmigen Messerplatte 1, die, in Draufsicht auf ihre Vorderseite 3 betrachtet, eine quadratische Grundform aufweist, welche im Wesentlichen symmetrisch ausgebildet ist und senkrecht zueinander verlaufende Mittellinien 5A und 5B aufweist. Entlang parallel zueinander verlaufenden ersten und zweiten Randkanten 7A beziehungsweise 7B verlaufen eine erste Spanfläche beziehungsweise eine zweite Spanfläche. Weiterhin verlaufen entlang der beiden übrigen, dritten und vierten Randkanten 7C und 7D dritte beziehungsweise vierte Spanflächen. Die Spanflächen, welche in den Figuren nicht weiter gekennzeichnet sind, werden vorzugsweise jeweils durch eine nicht dargestellte Spanleitstufe begrenzt, wobei die Spanflächen ausgehend von den zugehörigen Randkanten in Richtung auf die Rückseite 9 der Messerplatte 1 abfallen, steigen die Spanleitstufen in Richtung auf die Vorderseite 3 an. Derartige Spanflächen und Spanleitstufen sind allgemein bekannt, so dass hier nicht näher darauf eingegangen wird.

In der Mitte der Vorderseite 3 zwischen den Spanflächen ist eine erste, längliche Spannnut 11 mit bei diesem Ausführungsbeispiel insgesamt zwei, V-förmig zueinander verlaufenden Spannflächen 13 und 15 vorgesehen. Die erste Spannnut 11 ist symmetrisch zu ihrer Mittelachse 17 ausgebildet, die mit der Mittellinie 5A der Messerplatte 1 einen Winkel α einschließt, der vorzugsweise im Bereich von 10° bis 20° liegt und bei dem dargestellten Ausführungsbeispiel etwa 15° beträgt. Des Weiteren ist eine zweite Spannnut 19 mit ebenfalls zwei V-förmig zueinander verlaufenden Spannflächen 21 und 23 vorgesehen ist, deren Mittelachse 25 orthogonal, das heißt senkrecht zur Mittelachse 17 der ersten Spannnut 11 verläuft. Die ersten und zweiten Spannnuten 11 und 19, welche in Größe und Form vorzugsweise identisch sind, schneiden einander, wodurch sich eine Kreuzform ergibt.

Aus Figur 1A ist ohne weiteres ersichtlich, dass das durch die senkrecht zueinander verlaufenden Spannnuten 11 und 19 gebildete Spannkreuz nicht der Außenkontur der Messerplatte folgt, das heißt, die Mittelachsen der Spannnuten 11, 19 verlaufen nicht parallel zu den Seitenflächen beziehungsweise den Randkanten 7A und 7B beziehungsweise 7C und 7D. Die quasi ein rechtwinkliges Kreuz bildenden Spannnuten 11, 19 sind gegenüber den Außen-/Randkanten der Messerplatte um einen Winkel verschwenkt, der aufgrund der Parallelität zwischen den Randkanten 7A und 7B und der Messerplattenmittellinie 5B und zwischen den Randkanten 7C und 7D und der Messerplattemittellinie 5A dem Winkel α entspricht. Der Winkel, um den das Spannkreuz gegenüber den Außenlängskanten der Messerplatte um eine durch den Schnittpunkt 26 der Mittellinien 5A, 5B und Mittelachsen 17, 25 verlaufende Achse verschwenkt sind, liegt also vorzugsweise in einem Bereich von 10° bis 20°. Dadurch ergeben sich Vorteile bei der Aufteilung der Spannkräfte in mehrere Kraftkomponenten, von denen eine davon eine gewünscht hohe Anpressung der Messerplatte in den Messerplattesitz der Reibahle sicherstellt, worauf nachfolgend noch näher eingegangen wird.

Die Mittelachsen 17, 25 der Spannnuten 11, 19 schließen also einen Winkel β von 90° ein. Die Größe und Anordnung der ersten und zweiten Spannnuten 11, 19 ist weiterhin so gewählt, dass die Spanflächen nicht unterbrochen werden, das heißt, die Spannnuten bilden auf der Vorderseite 3 eine umfangseitig geschlossene Vertiefung aus, wobei der Mittelpunkt der Mittelachsen 17, 25 der ersten und zweiten Spannnuten 11, 19 mit dem Mittelpunkt der Mittellinien 5A, 5B der Messerplatte 1 zusammenfällt und wobei die ersten und zweiten sich kreuzenden Spannnuten 11, 19 punktsymmetrisch zum Mittelpunkt der Mittellinien 5A, 5B ausgebildet sind. Die Spannnuten 11, 19 sind also punktsymmetrisch angeordnet zu dem Schnittpunkt 26 der Mittellinien 5A, 5B und Mittelachsen 17, 25. Schließlich fallen die Spannflächen 13, 15, 21, 23 gegenüber der hier ebenen Vorderseite 3 in Richtung der Rückseite der Messerplatte um einen Winkel ab, der im Bereich von 10° bis 15° liegt. Mit anderen Worten, die Spannflächen 13, 15, 21, 23 verlaufen schräg in die Bildebene der Figur 1A hinein.

Die Ecken der Messerplatte 1 sind jeweils mit einer Abschrägung versehen, das heißt die Randkanten 7A bis 7D reichen jeweils nicht bis in die geometrische Ecke des quadratischen Grundkörpers heran, sondern fallen vorher unter einem Winkel zur Mittellinie 5A beziehungsweise 5B ab. Dieser von jeweils einer der Randkanten ausgehende und - bei Betrachtung von Figur 1A im Uhrzeigersinn gesehen - in Richtung zur angrenzenden Randkante abfallende Bereich bildet die geometrisch bestimmte Hauptschneide 27A, 27B, 27C beziehungsweise 27D der Messerplatte 1, die über einen Scheitelpunkt 29 in eine geometrisch bestimmte Nebenschneide 31A, 31B, 31C beziehungsweise 31D übergeht, die von dem sich an den Scheitelpunkt 29 anschließenden Bereich der jeweiligen Randkante 7 gebildet wird.

Bei Verwendung der Messerplatte 1 wird diese so in ein Werkzeug eingesetzt, dass die jeweilige aktive Nebenschneide 31 in Richtung auf die Drehachse des Werkzeugs abfällt und zwar üblicherweise um etwa 1 Mikrometer (µm) auf einem Millimeter (mm).

Wie aus Figur 1A ersichtlich, sind bei der bezüglich des Schnittpunkts 26 punktsymmetrisch ausgebildeten Messerplatte 1 insgesamt vier Schneidenbereiche vorgesehen, von denen jeweils zwei an diagonal gegenüberliegenden Ecken der Messerplatte 1 angeordnet sind. Eine Messerplatte mit zumindest zwei gegenüber liegenden Schneidenbereichen ist grundsätzlich bekannt. Eine derartige Messerplatte 1 wird auch als Wendeplatte bezeichnet. Wenn eine der Hauptschneiden 27A bis 27D und die jeweils zugehörige Nebenschneide 31A, 31B, 31C beziehungsweise 31D verschlissen sind, kann die Messerplatte 1 um eine senkrecht auf der Vorderseite 3 durch den Schnittpunkt 26 führende gedachte Achse um 90° gedreht werden, so dass dann die in Drehrichtung nachfolgenden Haupt- und Nebenschneiden für die spanende Bearbeitung eines Werkstücks zur Verfügung stehen.

Üblicherweise sind die Stirnseiten des Grundkörpers gegenüber der Vorderseite 3 in einem Winkel von 90° angeordnet, sie fallen also bei der Darstellung gemäß Figur 1A senkrecht in die Bildebene von Figur 1A ab. Bei dem in den Figuren 1A bis 1C dargestellten Ausführungsbeispiel sind jedoch die sich an die Randkanten 7 anschließenden Seitenflächen 33 der Messerplatte 1 in einem Winkel von < 90° geneigt, sie fallen also zur Mittellinie 5A beziehungsweise 5B hin ab. Betrachtet man also die Messerplatte 1 mit Blickrichtung auf eine der Stirnseiten gemäß der Darstellung der Figur 1B, so ist sie im Wesentlichen trapezförmig ausgebildet, wobei die in Figur 1A sichtbare Vorderseite 3 quer zur Mittellinie breiter ist als die der Vorderseite 3 gegenüberliegende und parallel zu dieser verlaufende Rückseite 9 der Messerplatte 1. Der Winkel, unter dem die Seitenflächen 33 von der Randkanten 7 aus gesehen abfallen, wird als Freiwinkel bezeichnet, welcher vorzugsweise in etwa 11° beträgt.

Bei dem anhand der Figuren 1A bis 1C beschriebenen Ausführungsbeispiel der Messerplatte 1 können die Hauptschneiden 27 aus dem Grundkörper der Messerplatte 1 herausgearbeitet werden. Denkbar ist es aber auch, in den Grundkörper im Bereich der Hauptschneiden 27 und der Nebenschneiden 31 einen Einsatz aus beispielsweise PCBN einzusetzen. In diesem Fall würden sich die Spanflächen und die gegebenenfalls jeweils vorgesehenen Spanleitstufen nur über die Länge dieses Einsatzes erstrecken.

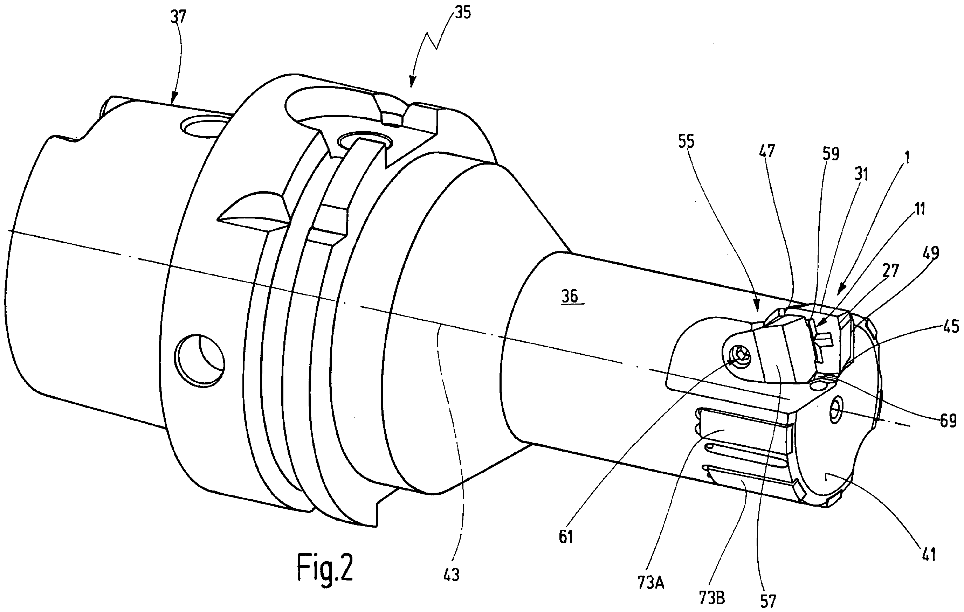

Figur 2 zeigt in perspektivischer Darstellung ein Ausführungsbeispiel eines Feinbohrwerkzeugs, welches hier von einer einen Grundkörper 36 aufweisenden Reibahle 35 gebildet ist. An den Grundkörper 36 schließt sich ein Hohlschaftkegel 37 zur Kopplung der Reibahle 35 in beziehungsweise an eine Werkzeugmaschine an.

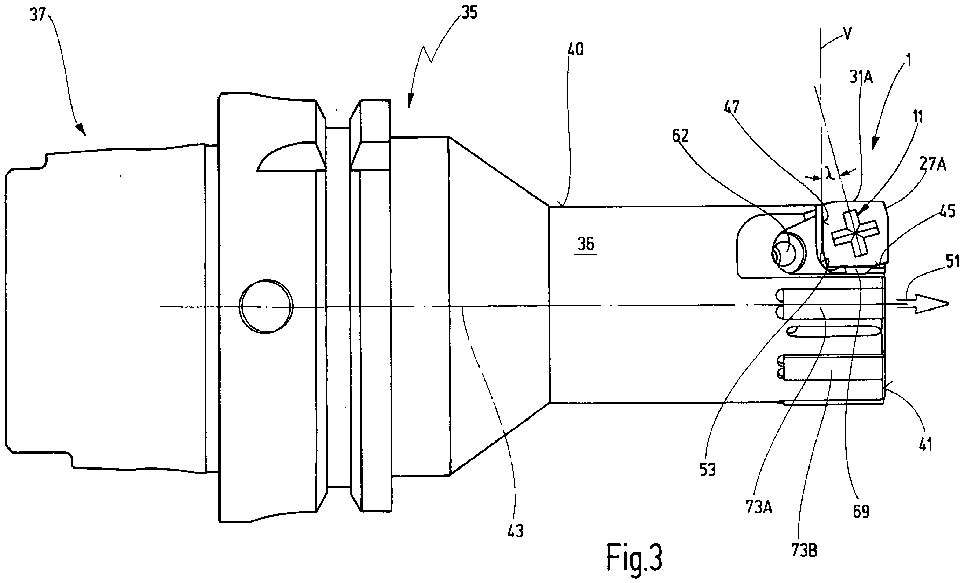

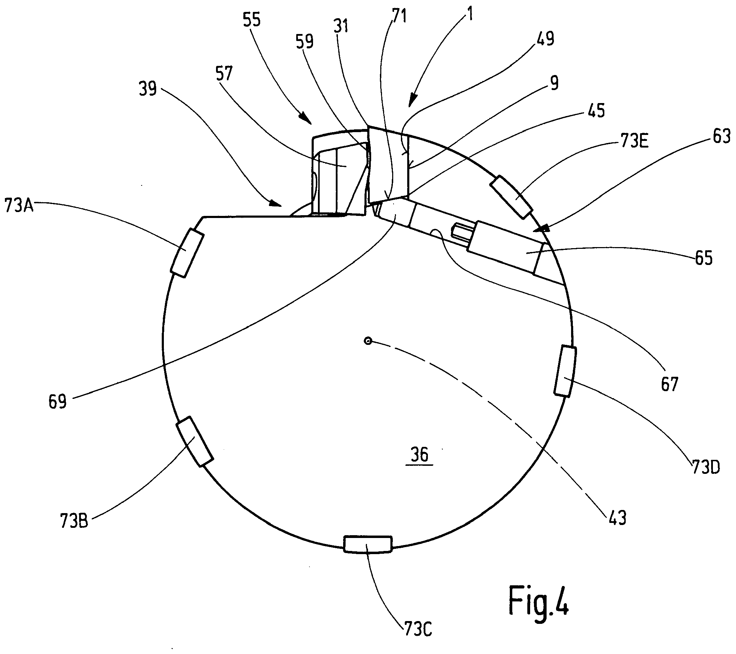

Am vorderen Ende des Grundkörpers 36 der Reibahle 35 ist ein hier von einer randoffenen Nut gebildeter Plattensitz 39 zur Aufnahme der vorstehend beschriebenen Messerplatte 1 vorgesehen. Der Plattensitz 39 ist zur Stirnseite 41 der Reibahle 35 und zur Umfangsfläche 40 des Grundkörpers 36 hin offen und verläuft im Wesentlichen parallel zur Drehachse 43 der Reibahle 35. Der Plattensitz 39 weist aufgrund seiner endseitigen Anordnung am Grundkörper 36 lediglich drei Wandungen auf, nämlich einen Grund 45 und erste und zweite Seitenflächen 47 beziehungsweise 49, die jeweils plan ausgebildet sind. Die erste Seitenfläche 47 ist am der Stirnseite 41 der Reibahle 35 abgewandten Ende des Plattensitzes 39 vorgesehen und bildet dabei einen axialen Anschlag für die Messerplatte 1. Dabei ist die erste Seitenfläche 47 entgegen der in Figur 3 durch einen Doppelpfeil 51 gekennzeichneten Vorschubrichtung geneigt, fällt also weg von der Stirnseite 41 der Reibahle 35. Es wird klar, dass die erste Seitenfläche 47 in Querrichtung zur Vorschubrichtung der Reibahle verläuft, was auch aus den Figuren 2 und 3 ersichtlich ist. Die zweite Seitenfläche 49 steht bei dem in den Figuren 2 und 4 dargestellten Ausführungsbeispiel senkrecht oder zumindest im Wesentlichen senkrecht zur ersten Seitenfläche 47 und verläuft parallel zur Längsmittelachse der Reibahle, welche hier mit der Drehachse 43 zusammenfällt.

Wie insbesondere aus Figur 2 ersichtlich, erstreckt sich der Plattensitzgrund 45 von der Stirnseite 41 bis zum endseitigen, durch die erste Seitenfläche 47 gebildeten Anschlag, wobei der Grund 45 in einer zumindest im Wesentlichen parallel zu einer Vorschubrichtung angeordneten Ebene oberhalb der Drehachse 43 liegt. Der Grund 45 sowie die ersten und zweiten Seitenflächen 47, 49 sind bei dem in den Figuren 2 bis 4 dargestellten Ausführungsbeispiel der Reibahle 35 eben ausgebildet. Im Übergangsbereich zwischen der ersten Seitenfläche 47 und dem Grund 45 ist eine Freilegung 53 vorgesehen, um eine exakt definierte Position der Messerplatte 1 zu gewährleisten und um Beschädigungen des bei in den Plattensitz eingesetzter Messerplatte 1 in diesem Übergangsbereich angeordneten Schneidenbereichs auszuschließen. Eine derartige Freilegung kann auch im Übergangsbereich zwischen dem Grund 45 und der zweiten Seitenfläche 49 vorgesehen werden.

Die Reibahle 35 umfasst ferner eine in den Figuren 2 und 4 erkennbare Spanneinrichtung 55 zur Fixierung der Messerplatte 1 im Plattensitz 39. Die Spanneinrichtung 55 umfasst eine Spannpratze 57, die mit einer Spannlippe 59 in die erste Spannnut 11 auf der Vorderseite 3 der Messerplatte 1 eingreift. Die Spanneinrichtung 55 weist eine Spannschraube 61 auf, die vorzugsweise zwei Gewindeabschnitte aufweist, die sich durch gegenläufige Steigungen auszeichnen. Ein erster Gewindeabschnitt greift in ein Innengewinde, das in einer Durchgangsbohrung vorgesehen ist, die die Spannpratze 57 durchgreift und der Aufnahme der Spannschraube 61 dient. Der andere Gewindeabschnitt der Spannschraube 61 greift in den Grundkörper 36 der Reibahle 35 im Bereich einer Öffnung 62 ein. Wichtig ist, dass die Messerplatte nicht direkt durch die Spannschraube 61 sondern unmittelbar, das heißt direkt durch die Spannpratze 57 am Rundkörper des Werkzeugs fixiert wird. Hierzu greift die Spannpratze in die speziell ausgerichteten Nuten auf der Messerbrust ein.

Die Reibahle 35 umfasst ferner eine Justiereinrichtung 63 mit lediglich einer Stellschraube 65, die mit ihrem Außengewinde mit dem Innengewinde einer in den Grundkörper 36 der Reibahle 35 eingebrachten sekantial verlaufenden Bohrung 67 zusammenwirkt. Bei einer Drehung der Stellschraube 65 wird diese mehr oder weniger weit in den Grundkörper 36 der Reibahle eingeschraubt, wobei sie entweder direkt auf die dem Plattensitzgrund 39 zugewandte Seitenfläche 33 der Messerplatte 1 wirkt oder, wie hier dargestellt, über ein keilförmiges Justierteil 69, das durch eine im Grund 45 des Plattensitzes 39 vorgesehene Öffnung in den Plattensitz 39 hineinragt und zwar soweit, dass sichergestellt ist, dass die Messerplatte 1 keinen Kontakt zum Plattensitzgrund 45 hat und nur auf einer am Justierteil 69 stirnseitig vorgesehenen Schrägfläche 71 auf- beziehungsweise anliegt. Diese ist entsprechend dimensioniert, wobei aus Figur 3 ersichtlich ist, dass sich das Justierteil 69 nur über einen Teil der Länge des Plattensitzgrunds erstreckt und damit relativ klein ist. Da die Messerplatte 1 mit dem Plattensitzgrund keinen Kontakt hat und der Plattensitzgrund weder eine Ausricht- noch Abstützfunktion für die Messerplatte besitzt, braucht dieser nicht oder nicht so exakt ausgeführt sein, was die Kosten für das Werkzeug reduziert.

Zu dem in den Figuren dargestellten Ausführungsbeispiel der Reibahle bleibt festzuhalten, dass aufgrund des Überstands des endseitig an der Stellschraube 65 vorgesehenen, keilförmigen Justierteils 69 über den Grund 45 der randoffenen Nut 39 der eigentliche Messerplattensitz von den ersten und zweiten Seitenflächen und der Schrägfläche 71 am Justierteil 69 gebildet ist. Beim Festspannen der Messerplatte mittels der Spanneinrichtung 55 wird die Messerplatte insbesondere aufgrund des gegenüber den Außenkanten der Messerplatte verschwenktem Spannkreuzes, welches durch die orthogonal zueinander verlaufenden Spannnuten 11, 19 gebildet ist, in diesen Plattensitz quasi eingezogen. Hierdurch wird eine exakte Anlage der Messerplatte an den Wandungen (Seitenflächen 47, 49 sowie Schrägfläche 71) des Plattensitzes mit einer gewünscht hohe Anpresskraft erreicht, so dass eine sichere und reproduzierbare Fixierung der Messerplatte gewährleistet werden kann. Der vorzugsweise flächige Anlagekontakt zwischen der Messerplatte und den Wandungen des Plattensitzes besteht auch während des Einstellens des Überstands der Messerplatte über die Umfangsfläche der Reibahle mittels der Justiereinrichtung, bei dem die Messerplatte mit ihrer der ersten Seitenfläche 47 zugewandten Seitenfläche auf der ersten Plattensitzseitenfläche 47 entlang gleitet, ohne dass die Messerplatte dabei verkippt. Eine Veränderung der Nebenschneidenverjüngung kann daher trotz Veränderung der Radialposition der Messerplatte sicher verhindert werden.

Aus Figur 2 in Verbindung mit Figur 4 ist ersichtlich, dass die Spanneinrichtung und die Justiereinrichtung etwa im gleichen Abstand zur Stirnseite 36 angeordnet sind. Bei diesem Ausführungsbeispiel ist dies durch eine im Wesentlichen gegenüberliegende Anordnung der Spanneinrichtung und der Justiereinrichtung zurückzuführen, was eine besonders kompakte Bauweise ermöglicht. Durch die relativ flach verlaufende Schrägfläche 71 am Justierteil 69 ist eine sehr feinfühlige Justierung möglich. Darüber hinaus können beim Justieren sowohl sehr hohe Kräfte auf die Messerplatte ausgeübt als auch radial wirkende Zerspanungskräfte aufgenommen werden.

Wird die Spannschraube 61 mittels eines geeigneten Werkzeugs in Rotation versetzt, so wird bei einer ersten Drehrichtung die Spannpratze 57 festgezogen, so dass die Spannlippe 59 mit der Spannflächen 13 oder 15 der ersten Spannnut 11 zusammenwirkt. Die dabei aufgebrachten Spannkräfte werden durch die schräge Anordnung der ersten Spannnut 11, die anhand der Figuren 1A bis 1C im Einzelnen erläutert wurde, in mindestens zwei Kräfteanteile aufgespaltet: Eine erste Teilkraft wirkt senkrecht zur Mittellinie 5A der Messerplatte 1, also in die Bildebene der Figur 1 hinein, eine zweite Teilkraft in Richtung der Mittellinie 5A, hier nach links.

Bei der Darstellung gemäß den Figuren 2 und 3 wird davon ausgegangen, dass die rechte vordere obere Ecke der Messerplatte 1 eine Hauptschneide 27 und eine Nebenschneide 31 aufweist, wie sie oben anhand von Figur 1 im Einzelnen erläutert wurde. Bei der Darstellung gemäß Figur 3 fällt die Hauptschneide 27 in Richtung der Vorschubrichtung 51 ab. Entsprechend fällt die Nebenschneide 31 entgegen der Vorschubrichtung 51 zur Drehachse 43 der Reibahle 35 durch entsprechende Anordnung und Einstellung der Messerplatte 1 im Plattensitz 39 ab.

In Figur 3 ist die Reibahle 35 mit in den Plattensitz 39 eingesetzter Messerplatte 1 dargestellt, jedoch ohne die Spanneinrichtung. Die in dieser Lage der Messerplatte 1 mit der Spannpratze 57 zusammenwirkende Spannnut 11 ist gegenüber einer gedachten Vertikalen V entgegen der Vorschubrichtung um einen Winkel λ geneigt, der im Bereich von 10° bis 20° liegt und hier insbesondere um die 15° beträgt. Der Neigungswinkel λ und der Winkel α sind hier im Wesentlichen gleich groß, was unter anderem durch eine entsprechende Anordnung der Plattensitzseitenflächen und der Grundform der Messerplatte sowie die beschriebene Anordnung der Spannnut an der Messerplattenvorderseite möglich ist. Hierdurch ist eine sichere Anpressung der Messerplatte 1 gegen die ersten und zweiten Seitenflächen 47, 49 des Plattensitzes 39 sowie gegen das Justierteil 69 der Justiereinrichtung 63 gewährleistet. Mit anderen Worten, die Spannpratze 57 zieht die Messerplatte in den Plattensitz hinein, wobei aufgrund der Spannpratze und deren Anordnung am Reibahlengrundkörper ein großer Teil der Klemm- beziehungsweise Spannkräfte auf die zweite Seitenfläche 49 des Plattensitzes 39 wirken, wobei durch den Einzug der Messerplatte in den Plattensitz 39 auch die erste Seitenfläche 47 mit Spannkräften beaufschlagt wird. Aufgrund der zwar nur geringen jedoch ausreichenden Neigung der ersten Seitenfläche 47 des Plattensitzes 39 ist auch die an dieser anliegende Messerplatte 1 in Bezug auf die Längsmittelachse der Reibahle 35 etwas verdreht angeordnet. Durch diese Maßnahme ergibt sich eine Verjüngung an der Nebenschneide 31, die exakt festgelegt ist und zuverlässig eingehalten werden kann.

Beim Einstellen des Bearbeitungsdurchmessers der Reibahle 35 wird die an den ersten und zweiten Seitenflächen 47, 49 des Plattensitzes 39 und an dem Justierteil 69 anliegende Messerplatte 1 mittels der Justiereinrichtung radial nach außen gedrückt. Dabei gleitet die an der ersten Plattensitzseitenfläche 47 anliegende Seitenfläche 33 der Messerplatte 1 entlang der Plattensitzseitenfläche 47, ohne dass sich die Verjüngung der Nebenschneide 31 ändert. Es erfolgt also eine Parallelverschiebung der aktiven Nebenschneide, indem die Messerplatte 1 unter Anlage an der ersten Seitenfläche in radialer Richtung nach außen verschoben oder nach innen bewegt wird.

Vorzugsweise wird vor dem Einstellen des Bearbeitungsdurchmessers der Reibahle die Spannpratze 57 bereits vorgespannt, so dass die Messerplatte 1 spielfrei im Plattensitz 39 gehalten wird, wodurch Setzbewegungen dieses Befestigungssystems vermieden werden. Nachfolgend wird mittels Verstellung des Justierteils 69 die Messerplatte 1 radial nach außen gedrückt, wodurch sich die auf die Messerplatte 1 wirkende Spannkraft noch weiter durch den Winkel der Spannnutflanke, das heißt der Spannfläche 13 und dem Schwenkwinkel der Spannnut 11 gegenüber der Vertikalen V erhöht. Durch die vorstehend genannten Winkelverhältnisse wird quasi ein Keilgetriebe realisiert, das dazu beiträgt, dass die Messerplatte 1 optimal im Grundkörper der Reibahle 35 verspannt wird. Dabei wirkt die Spannkraft - wie bereits beschrieben - in verschiedene Wirkrichtungen, die durch die Anordnung der Spannnut so aufeinander abgestimmt sind, dass die Messerplatte sicher an den Anlageflächen des Plattensitzes sowie der Anlagefläche der Justierung anliegt, wobei diese Anlageflächen jeweils als Widerlager für die Messerplatte 1 dienen.

Nach allem bleibt festzuhalten, dass bei der Bearbeitung einer Bohrung auf die Messerplatte Zerspanungskräfte einwirken, beispielsweise im Bereich des Anschnittes Radial-, Axial- und Tangentialkräfte. Je nach Material und Anschnittsgeometrie und Schnittwerten ändert sich das Verhältnis dieser Kräfte zueinander beziehungsweise der Betrag der einzelnen Kraftkomponenten. Es zeigt sich jedoch, dass die Messerplatte 1 im Grundkörper 36 beziehungsweise im Plattensitz 39 der Reibahle 35 so abgestützt ist, dass diese Kräfte ebenfalls in die Abstützflächen an der Messerplattenrückseite 9 und in die ersten und zweiten Seitenflächen 47, 49 des Plattensitzes in den Reibahlengrundkörper 36 eingeleitet und abgestützt werden. Durch die beschriebene optimale Verspannung der Messerplatte beim Einspannen und nachfolgendem Justieren derselben ergeben sich auch unter Einwirkung der Zerspanungskräfte keinerlei Setzbewegungen oder Vibrationen, und die eingestellten Werte des Bearbeitungsdurchmessers und der Verjüngung bleiben zuverlässig erhalten.

In die Umfangsfläche 40 der Reibahle 35 sind beispielhaft fünf Führungsleisten 73A bis 73E eingesetzt, die der Führung der Reibahle 35 in einer zu bearbeitenden Bohrung dienen.

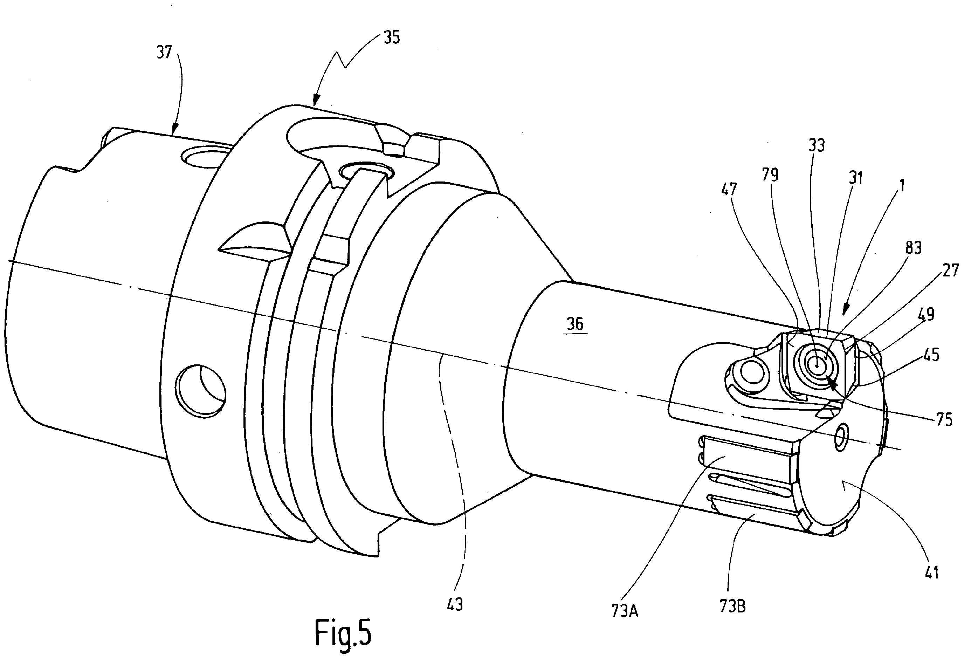

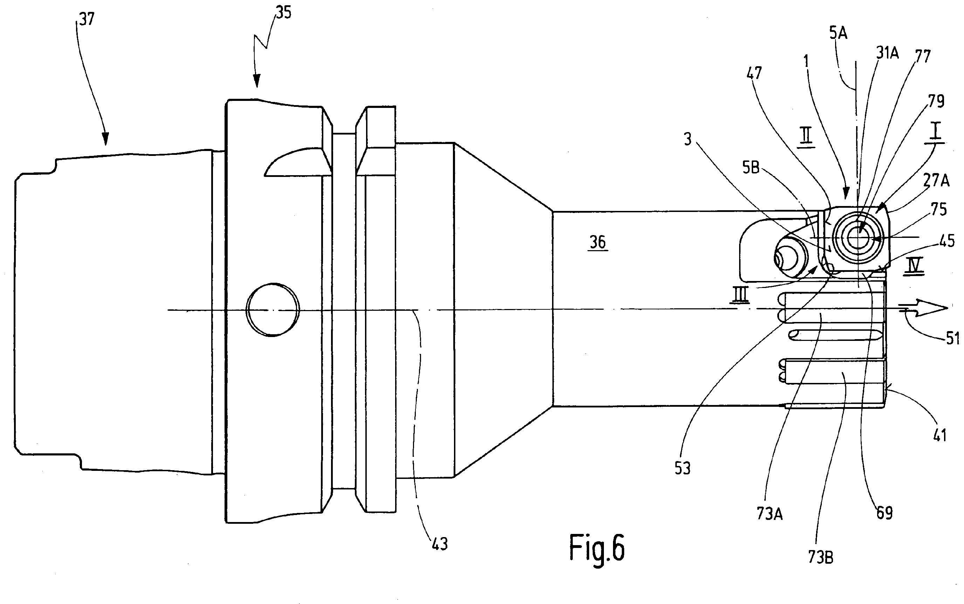

Figuren 5 und 6 zeigen jeweils eine Ansicht eines weiteren nicht zur Erfindung gehörenden Beispiels der Reibahle 35, worin sich die Reibahle von der anhand der Figuren 1A bis 4 beschriebenen Reibahle lediglich in der Ausführungsform der Messerplatte 1 und der Spannpratze 57 unterscheidet. Gleiche Teile sind daher mit gleichem Bezugszeichen versehen, so dass insofern auf die Beschreibung der vorangegangenen Figuren verwiesen wird. Im Folgenden wird lediglich auf die Unterschiede näher eingegangen.

Anstelle der Kreuznuten ist in der auch als Messerbrust bezeichneten Vorderseite 3 eine hier konische Vertiefung 75 eingebracht, welche die Messerplatte 1 nicht durchdringt, sondern in der Art eines Sacklochs ausgebildet ist.

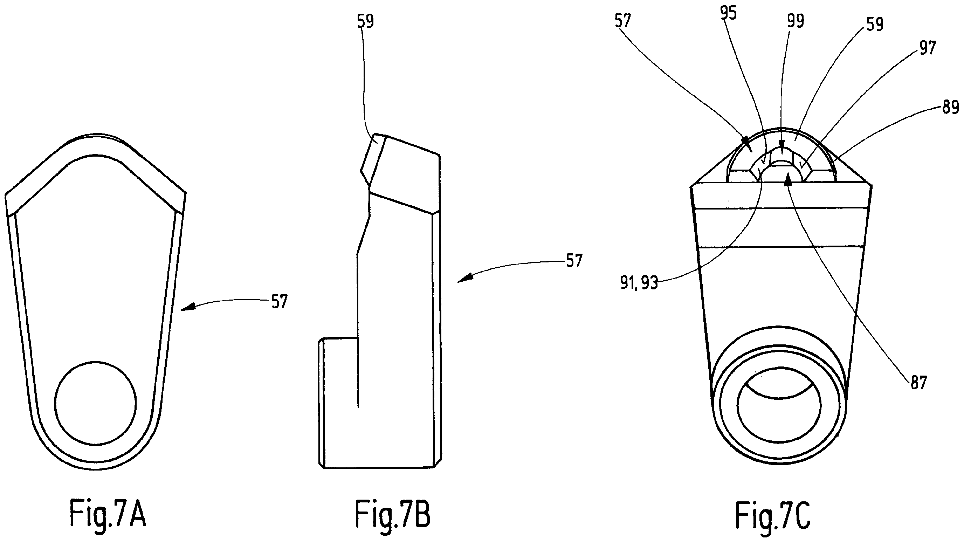

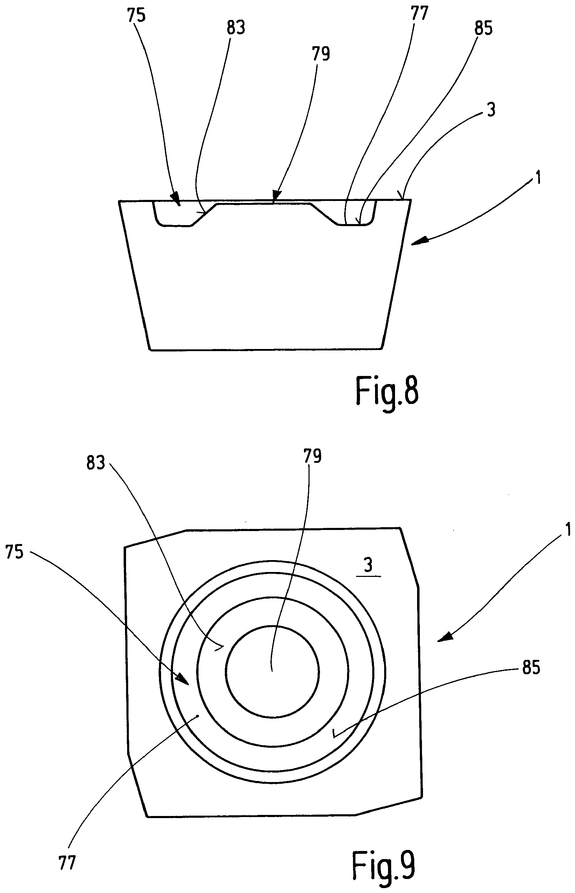

Wie aus Figuren 8 und 9 ersichtlich, die eine Schnittdarstellung durch die Messerplatte gemäß der Figuren 5 und 6 beziehungsweise eine Draufsicht auf die Vorderseite dieser Messerplatte zeigen, weist die Vertiefung 75 an ihrem Grund 77 einen kleineren Durchmessers auf als im Bereich der Vorderseite 3 der Messerplatte 1. Alternativ ist es möglich, die Vertiefung 75 auch zylindrisch auszuführen. Im Grund 77 der Vertiefung 75 ist ein domartig in Richtung der Vorderseite 3 hervorstehender Spannkörper 79 vorgesehen, dessen Mantelfläche 81 zumindest abschnittsweise eine mit der Spanneinrichtung 55 zusammenwirkende Spannfläche 83 bildet. Der einstückig mit der Messerplatte ausgebildete Spannkörper 79 verjüngt sich in Richtung seines freien Endbereichs hin und weist insgesamt eine kegelstumpfförmige Grundform auf. Zwischen dem konzentrisch zur Vertiefung 75 angeordneten, dem Grund 77 quasi entspringenden Spannkörper 79 und der Wand der Vertiefung 75 ist am Grund 77 eine plane Ringfläche 85 vorgesehen, so dass insgesamt ein Freiraum gebildet ist, in welchen eine geeignete Spannpratze, wie sie beispielhaft anhand der Figuren 7A bis 7C beschrieben wird, mit ihrer Spannlippe eingreifen kann.

Figuren 7A bis 7C zeigen jeweils eine Ansicht einer Ausführungsform der Spannpratze 57, welche geeignet ist, eine in den Figuren 5, 6, 8 sowie 9 dargestellte Messerplatte 1 in gewünschter Weise an der Reibahle 35 fest zu spannen. Wie insbesondere in Figur 7C erkennbar, weist die Spannpratze 57 eine Spannlippe 59 auf, die im Wesentlichen halbkreisförmig ausgebildet ist und in ihrem mittleren Bereich mit einer randoffenen Ausnehmung 87 versehen ist. Die äußere Wand 89 der Spannlippe 59 ist an die Wand der in der Messerplatte 1 befindlichen Vertiefung 75 und die innere Wand 91 an die Spannfläche 83 am Spannkörper 79 so angepasst, dass Wände 89 und 91 im verspannten Zustand der Messerplatte 1 flächig an der als Spannfläche 83 dienenden Außenfläche des Spannkörpers der Messerplatte anliegen können.

Die innere Wand 91 der Spannlippe 57 bildet also eine mit dem Spannkörper 79 zusammenwirkende Spannfläche 93. Diese ist mittels einer die Spannfläche 93 in hier zwei gleich große, voneinander getrennte Teilspannflächen 95 und 97 unterteilende Unterbrechung 99 versehen. Hierdurch werden zwei voneinander beabstandete Anlagebereiche definiert.

Um die in den Plattensitz 39 der Reibahle 35 eingesetzte Messerplatte 1 zu fixieren, werden die Spannlippe 59 der Spannpratze 57 in die ringförmige Vertiefung 75 eingeführt, und die Spannpratze 57 mittels der in den Figuren 5 und 6 nicht dargestellten Spannschraube 61 verspannt. Dabei kommen die Teilspannflächen 95, 97 der Spannpratze 57 in Anlage mit der Spannfläche 83 des Spannkörpers an der Messerplatte 1. Wichtig ist, dass die Anordnung der Teilspannflächen an der Spannpratze 57 so gewählt ist, dass sich diese Anlagekontaktbereiche im Bereich der der aktiven Schneide der Messerplatte naheliegenden Umfangsbereich des Spannkörpers befinden, so dass wie bei der anhand der Figuren 2 bis 4 beschriebenen Reibahle die aufgebrachten Spannkräfte in die Teilkräfte aufgeteilt werden, welche die Messerplatte gegen ihre als Widerlager dienende Anlageflächen am Grundkörper 36 der Reibahle beziehungsweise dem Justierteil der Justiereinrichtung pressen.

Bei dem Ausführungsbeispiel gemäß der Figur 6 liegen die Teilspannflächen der Spannpratze 57 größtenteils in dem rechts der Mittellinie 5A liegenden Bereich der Spannfläche 83 des Spannkörpers 79 an, also im mit dem Bezugszeichen "I" versehenen ersten Quadranten eines Koordinatensystems, dessen Koordinatenachsen von den Mittellinien 5A und 5B der Messerplatte 1 gebildet sind. Es ist klar, dass bei dieser Ausführungsform der Messerplatte und der Spanneinrichtung die Spannlippe auch teilweise in den im zweiten Quadranten II und dem vierten Quadranten IV liegenden Bereichen am Spannkörper der Messerplatte anliegt. Wichtig ist, dass die auf den Spannkörper aufgebrachten Spannkräfte nahe der aktiven Schneiden 31A und 27A der Messerplatte in diese eingeleitet und an den Anlageflächen der Messerplatte an den Plattensitzseitenflächen 47 und 49 und der Anlagefläche des Justierteils in den Grundkörper 36 der Reibahle 35 eingeleitet werden.

Zusammenfassend bleibt festzuhalten, dass bei den anhand der Figuren beschriebenen Spannsystemen eine sehr leistungsfähige Reibahle geschaffen ist, welche auch leicht in ihrer Handhabung ist. Die Einstellung dieses Werkzeugs, also die Justierung der Reibahle ist in einfacher Weise möglich und kann ohne weiteres auch ohne spezielles Equipment und durch weniger erfahrene Personen sicher ausgeführt werden. Mittels der vorgeschlagenen Spannsysteme können eine erhöhte Stabilität und feste Einspannung der Messerplatte stets gewährleistet werden.

## Patentansprüche

1. Reibahle (35) mit
- einem Grundkörper (36),
- einer Drehachse (43),
- mindestens einem in den Grundkörper (36) eingelassenen, mindestens erste und zweite Seitenflächen (47,49) aufweisenden Plattensitz (39),
- einer in den Plattensitz (39) eingesetzten, mindestens eine Nebenschneide (31A,31B,31C,31D) aufweisenden Messerplatte (1), insbesondere einer Messerplatte nach einem der Ansprüche 10 bis 14,
- einer die Messerplatte im Plattensitz festspannenden, eine Spannpratze (57) umfassenden Spanneinrichtung (55), wobei unter der Wirkung der Spannpratze (57) die Messerplatte (1) in Anlage mit zumindest der zweiten Seitenfläche (49) des Plattensitzes (39) bringbar ist, und mit
- einer ein Justierteil (69) aufweisenden Justiereinrichtung (63), mit der der Überstand zumindest einer Schneide der Messerplatte (1) über eine Umfangsfläche (40) oder über mindestens eine Führungsleiste (73A bis 73E) der Reibahle (35) einstellbar ist,
**dadurch gekennzeichnet, dass**
- zumindest die erste Seitenfläche (47) eben ausgebildet ist, dass
- die erste Seitenfläche (47) gegenüber einer gedachten Linie (Vertikale (V)), die auf der Drehachse (43) senkrecht steht, so geneigt ist, dass die Messerplatte (1) durch Anlage an der Seitenfläche (47) so ausgerichtet ist, dass deren Nebenschneide (31) eine bestimmte Verjüngung aufweist, wobei
- die Messerplatte (1) flächig mit ihren Anlagekontaktflächen (33) an der ersten Seitenfläche (47) anliegt, und dass
- im Grund (45) des Plattensitzes (39) eine Öffnung vorgesehen ist, durch welche das Justierteil (69) in den Plattensitz (39) hineinragt, und - dass die Messerplatte (1) auf ihrer dem Justierteil (69) zugewandten Seite -vorzugsweise ausschließlichan diesem anliegt.

2. Reibahle nach Anspruch 1, **dadurch gekennzeichnet, dass** deren Messerplatte (1) mittels des Justierteils (69), vorzugsweise bei zumindest vorgespannter Spanneinrichtung (55), entlang der ersten Seitenfläche (47) des Plattensitzes (39) verschiebbar ist.

3. Reibahle nach Anspruch 1 oder 2, **dadurch gekennzeichnet, dass** die erste Seitenfläche (47) einen Anschlag für die Messerplatte (1) bildet, und dass die erste Seitenfläche (47) am der Stirnseite (41) der Reibahle (35) abgewandten Ende des Plattensitzes (39) vorgesehen ist.

4. Reibahle nach einem der vorhergehenden Ansprüche, **dadurch gekennzeichnet, dass** deren Messerplatte (1) vollflächig mit ihren Anlagekontaktflächen (33) an der ersten Seitenfläche (47) und/oder flächig, vorzugsweise vollflächig an der zweiten Seitenfläche (49) und/oder der Anlagekontaktfläche des Justierteils (69) anliegt.

5. Reibahle nach einem der vorhergehenden Ansprüche, **dadurch gekennzeichnet, dass** die Justiereinrichtung (63) und die Spanneinrichtung (55) etwa gleich weit von der Stirnseite (41) des Plattensitzes (39) angeordnet sind.

6. Reibahle nach einem der vorhergehenden Ansprüche, **dadurch gekennzeichnet, dass** die Spannpratze (57) der Spanneinrichtung (55) eine Spannlippe (59) aufweist, und dass die Form der Spannlippe (59) an die an der Messerplatte (1) vorgesehenen Spannfläche (13,15,21,23) angepasst ist.

7. Reibahle nach Anspruch 6, **dadurch gekennzeichnet, dass** die Messerplatte (1) eine Messerplatte nach einem der Ansprüche 10 bis 14 ist, und dass eine Spannpratze (57) mit einer Spannlippe (59) vorgesehen ist, die im Wesentlichen als gerader Balken mit einer zumindest im Wesentlichen ebenen Spannfläche ausgebildet ist.

8. Reibahle nach Anspruch 6, **dadurch gekennzeichnet, dass** die Messerplatte (1) aufweist:
- mindestens eine geometrisch bestimmte Schneide,
- eine eckige Grundform,
- eine Vertiefung (75), in welcher mindestens eine Spannfläche (83) vorgesehen ist, wobei
- im Grund (77) der Vertiefung (75) ein domartig hervorstehender, die Spannfläche (83) aufweisender Spannkörper (79) vorgesehen ist, und wobei
- eine Spannpratze (57) mit einer Spannlippe (59) vorgesehen ist, die zumindest im Wesentlichen kurvenförmig, insbesondere halbkreisförmig mit einer kurvenförmigen beziehungsweise halbkreisförmigen Spannfläche ausgebildet ist.

9. Reibahle nach Anspruch 8, **dadurch gekennzeichnet, dass** die Spannlippe (57) mit einer die Spannfläche in mindestens zwei voneinander getrennte Teilspannflächen unterteilenden Unterbrechung versehen ist.

10. Messerplatte (1) mit
- mindestens einer geometrisch bestimmten Schneide,
- einer eckigen Grundform mit Randkanten (7A,7B,7C,7D),
- einer die Vorderseite (3) in zwei Hälften teilenden, gedachten Mittellinie (5A,5B), die senkrecht auf zwei Randkanten (7A,7B,7C,7D) steht,
- einer mindestens eine Spannfläche (13,15) und eine Mittelachse (17) aufweisenden ersten Spannnut (11), und mit
- einer mindestens eine Spannfläche (21,23) aufweisenden zweiten Spannnut (19), deren Mittelachse (25) orthogonal zur Mittelachse (17) der ersten Spannnut (11) verläuft, wobei
- der Mittelpunkt (26) der Mittelachsen (17,25) der Spannnuten (11,19) mit dem Mittelpunkt (26) der Mittellinie (5A,5B) der Messerplatte (1) zusammenfällt,
**dadurch gekennzeichnet, dass**
- die Messerplatte (1) eine rechteckige Vorderseite (3) aufweist, und dass
- die Mittelachse (17) der ersten Spannnut (11) gegenüber der Mittellinie (5A) um einen Winkel (α) geneigt ist, der im Bereich von 10° bis 20° liegt.

11. Messerplatte nach Anspruch 10, **dadurch gekennzeichnet, dass** die Spannnuten (11,19) punktsymmetrisch zum Mittelpunkt der Mittellinie ausgebildet sind.

12. Messerplatte nach Anspruch 10 oder 11, **dadurch gekennzeichnet, dass** die Spannnuten (11,19) jeweils mindestens eine, vorzugsweise jeweils zwei symmetrisch zur Mittelachse (17;25) der jeweiligen Spannnut (11,19) ausgebildete Spannflächen (13,15,21,23) aufweisen.

13. Messerplatte nach einem der vorhergehenden Ansprüche 10 bis 12, **dadurch gekennzeichnet, dass** zumindest eine der Spannflächen (13,15,21,23) gegenüber der vorzugsweise ebenen Vorderseite (3) um einen Winkel abfällt, der im Bereich von 10° bis 15° liegt.

14. Messerplatte nach einem der vorhergehenden Ansprüche 10 bis 13, **dadurch gekennzeichnet, dass** die Mittelachse (17) der ersten Spannnut (11) gegenüber der Mittellinie (5A) um einen Winkel (α) geneigt ist, der 15° beträgt.

15. Verfahren zum Einstellen des Bearbeitungsdurchmessers einer Reibahle nach einem der Ansprüche 1 bis 9, mit folgenden Schritten:
- Einsetzen der Messerplatte in den Plattensitz,
- Anziehen der Spannschraube so weit, bis die Messerplatte mit einer definierten Vorspannkraft an den ersten und zweiten Seitenflächen des Plattensitzes spielfrei anliegt, und
- Verlagerung des Justierteils unter praktisch radialer Verschiebung der Messerplatte entlang der ersten Seitenfläche des Plattensitzes in die dem gewünschten Durchmesser der Reibahle entsprechende Radialposition.

## Claims

1. Reamer (35), comprising
- a base body (36),
- a rotation axis (43),
- at least one insert seat (39) countersunk into the base body (36), and including at least first and second lateral surfaces (47, 49),
- a cutting insert (1) inserted into the insert seat (39), including at least one minor cutting edge (31A,31B,31C,31D), in particular, a cutting insert as set forth in claims 10 through 14,
- a clamping device (55) that clamps in place the cutting insert in the insert seat and includes a clamping jaw (57), wherein the cutting insert (1) is able to be brought into contact with at least the second lateral surface (49) of the insert seat (39) under the action of the clamping jaw (57), and comprising
- an adjustment device (63) including an adjustment part (69) by which the projection of at least one cutting edge of the cutting insert (1) is adjustable over a circumferential surface (40) or over at least one guide strip (73A through 73E) of the reamer (35),
**characterised in that**
- at least the first lateral surface (47) is designed even, that
- the first lateral surface (47) is inclined relative to an imaginary line (vertical (V)), standing vertically upright on the rotation axis (43), such that the cutting insert (1) is aligned by contacting the lateral surface (47) so that its minor cutting edge (31) has a defined taper, wherein
- the cutting insert (1) rests flatly with its seating contact surfaces (33) on the first lateral surface (47) and that
- an opening is provided at the base (45) of the insert seat (39), through which opening the adjustment part (69) protrudes into the insert seat (39), and that the cutting insert (1) at its side facing the adjustment part (69) adjoins - preferably exclusively - this part.

2. Reamer according to claim 1, **characterised in that** the reamer's cutting insert (1) is displaceable along the first lateral surface (47) of the insert seat (39) by means of the adjustment part (69), preferably with the clamping device (55) at least pretensioned.

3. Reamer according to claims 1 or 2, **characterised in that** the first lateral surface (47) forms a stop for the cutting insert (1), and that the first lateral surface (47) is provided on the end of the insert seat (39) opposite the end face (41) of the reamer (35).

4. Reamer according to one of the foregoing claims, **characterised in that** the reamer's cutting insert (1) rests flat with the entire surface of its seating contact surfaces (33) on the first lateral surface (47) and/or flat, preferably with the entire surface, on the second lateral surface (49) and/or on the seating contact surface of the adjustment part (69).

5. Reamer according to one of the foregoing claims, **characterised in that** the adjustment device (63) and the clamping device (55) are disposed at approximately the same distance from the end face (41) of the insert seat (39).

6. Reamer according to one of the foregoing claims, **characterised in that** the clamping jaw (57) of the clamping device (55) has a clamping lip (59), and that the shape of the clamping lip (59) is matched to the clamping surface (13,15,21,23) provided on the cutting insert (1).

7. Reamer according to claim 6, **characterised in that** the cutting insert (1) is a cutting insert according to one of the claims 10 through 14, and a clamping jaw (57) with a clamping lip (59) is provided which is essentially in the form of a straight beam with an at least essentially flat clamping surface.

8. Reamer according to claim 6, **characterised in that** the cutting insert (1) comprises:
- at least one geometrically defined cutting edge,
- an angular base shape,
- a depression (75) in which at least one clamping surface (83) is provided, wherein
- a dome-like protruding clamping body (79) is provided at the base (77) of the depression (75), which clamping body has the clamping surface (83), and wherein
- a clamping jaw (57) with a clamping lip (59) is provided which is constructed at least essentially curved, in particular, semicircular with a curved or semicircular clamping surface.

9. Reamer according to claim 8, **characterised in that** the clamping lip (57) is provided with a gap that subdivides the clamping surface into at least two separate partial clamping surfaces.

10. Cutting insert (1) comprising
- at least one geometrically defined cutting edge,
- an angular base shape with outer edges (7A,7B,7C,7D)
- an imaginary centre line (5A, 5B) dividing the front side (3) into two halves, the centre line vertically standing on two outer edges (7A,7B,7C,7D),
- a first clamping groove (11) having at least one clamping surface (13, 15) and a central axis (17), and with
- a second clamping groove (19) having at least one clamping surface (21, 23), the central axis (25) of the groove running orthogonally relative to the central axis (17) of the first clamping groove (11), wherein
- the centre point (26) of the central axes (17, 25) of the clamping grooves (11, 19) coincides with the centre point (26) of the centre line (5A, 5B) of the cutting insert (1),
**characterised in that**
- the cutting insert (1) has a rectangular front side (3), and that
- the central axis (17) of the first clamping groove (11) is inclined relative to the centre line (5A) by an angle (α) that ranges between 10° and 20°.

11. Cutting insert according to claim 10, **characterised in that** the clamping grooves (11, 19) are point-symmetrical relative to the centre point of the centre line.

12. Cutting insert according to claims 10 or 11, **characterised in that** the clamping grooves (11, 19) each have at least one clamping surface, preferably two clamping surfaces (13,15,21,23) each that are symmetrical relative to the central axis (17; 25) of the respective clamping groove (11, 19).

13. Cutting insert according to one of the foregoing claims 10 through 12, **characterised in that** at least one of the clamping surfaces (13,15,21,23) slopes away from the preferably flat front side (3) by an angle that ranges between 10° and 15°.

14. Cutting insert according to one of the foregoing claims 10 through 13, **characterised in that** the central axis (17) of the first clamping groove (11) is inclined relative to the centre line (5A) by an angle (α) that is 15°.

15. Method for adjusting the machining diameter of a reamer according to one of claims 1 through 9, with the following steps:
- inserting the cutting insert into the insert seat,
- tightening the clamping screw to the extent that the cutting insert contacts the first and second lateral surfaces of the insert seat without play with a defined pretensioning force, and
- moving the adjustment part along with essentially radial displacement of the cutting insert along the first lateral surface of the insert seat into the radial position corresponding to the desired diameter of the reamer.

## Revendications

1. Alésoir (35) comportant :
- un corps de base (36),
- un axe de rotation (43),
- au moins un siège de plaquette (39) incorporé dans le corps de base (36), présentant au moins une première et une deuxième surfaces latérales (47, 49),
- une plaquette de coupe (1) insérée dans le siège de plaquette (39), présentant au moins une arête coupante secondaire (31A, 31B, 31C, 31D), notamment une plaquette de coupe selon l'une quelconque des revendications 10 à 14,
- un dispositif de serrage (55) serrant la plaquette de coupe dans le siège de plaquette, comprenant une griffe de serrage (57), la plaquette de coupe (1), sous l'action de la griffe de serrage (57) pouvant être mise en appui contre au moins la deuxième surface latérale (49) du siège de plaquette (39), et comprenant
- un dispositif d'ajustage (63) présentant une pièce d'ajustage (69), à l'aide duquel la saillie d'au moins une arête coupante de la plaquette de coupe (1) est réglable par l'intermédiaire d'une surface circonférentielle (40) ou par l'intermédiaire d'au moins une barre de guidage (73A à 73E) de l'alésoir (35),
**caractérisé en ce**
- **qu'**au moins la première surface latérale (47) est réalisée de manière plane, en ce
- **que** la première surface latérale (47) est inclinée par rapport à une ligne imaginaire (verticale (V)), qui est perpendiculaire à l'axe de rotation (43), de manière à ce que la plaquette de coupe (1), en raison de l'appui contre la surface latérale (47), soit orientée de façon à ce que son arête coupante secondaire (31) présente un rétrécissement déterminé,
- la plaquette de coupe (1), avec ses surfaces de contact d'appui (33), étant en appui contre la première surface latérale (47) de manière plane, et en ce
- **qu'**au fond (45) du siège de plaquette (39) est ménagée une ouverture à travers laquelle la pièce d'ajustage (69) fait saillie dans le siège de plaquette (39) et en ce que la plaquette de coupe (1), sur son côté tourné vers la pièce d'ajustage (69), est - de préférence uniquement - en appui contre celle-ci.

2. Alésoir selon la revendication 1, **caractérisé en ce que** la plaquette de coupe (1) de celui-ci est coulissante le long de la première surface latérale (47) du siège de plaquette (39) au moyen de la pièce d'ajustage (69), de préférence au moins lorsque le dispositif de serrage (55) est précontraint.

3. Alésoir selon la revendication 1 ou 2, **caractérisé en ce que** la première surface latérale (47) forme une butée pour la plaquette de coupe (1), et **en ce que** la première surface latérale (47) est ménagée sur l'extrémité du siège de plaquette (39), détournée du côté frontal (41) de l'alésoir (35).

4. Alésoir selon l'une quelconque des revendications précédentes, **caractérisé en ce que** la plaquette de coupe (1) de celui-ci, avec ses surfaces de contact d'appui (33), est en appui à toute sa surface contre la première surface latérale (47) et/ou de manière plane, de préférence sur toute sa surface, contre la deuxième surface latérale (49) et/ou contre la surface de contact d'appui de la pièce d'ajustage (69).

5. Alésoir selon l'une quelconque des revendications précédentes, **caractérisé en ce que** le dispositif d'ajustage (63) et le dispositif de serrage (55) sont disposés environ à même distance du côté frontal (41) du siège de plaquette (39).

6. Alésoir selon l'une quelconque des revendications précédentes, **caractérisé en ce que** la griffe de serrage (57) du dispositif de serrage (55) présente une lèvre de serrage (59), et **en ce que** la forme de la lèvre de serrage (59) est adaptée à la surface de serrage (13, 15, 21, 23) ménagée sur la plaquette de coupe (1).

7. Alésoir selon la revendication 6, **caractérisé en ce que** la plaquette de coupe (1) est une plaquette de coupe selon l'une quelconque des revendications 10 à 14, et **en ce qu'**une griffe de serrage (57) munie d'une lèvre de serrage (59) est ménagée, laquelle est essentiellement réalisée comme barre rectiligne ayant une surface de serrage au moins essentiellement plane.

8. Alésoir selon la revendication 6, **caractérisé en ce que** la plaquette de coupe (1) présente :
- au moins une arête coupante déterminée de manière géométrique,
- une forme de base angulaire,
- un creux (75) dans lequel est ménagée au moins une surface de serrage (83),
- un corps de serrage (79) présentant la surface de serrage (83), faisant saillie en forme de dôme dans le fond (77) du creux (75) étant ménagé, et
- une griffe de serrage (57) munie d'une lèvre de serrage (59) étant ménagée, laquelle est réalisée au moins essentiellement de manière courbée, notamment en forme de demi-cercle, avec une surface de serrage de forme courbée, respectivement en forme de demi-cercle.

9. Alésoir selon la revendication 8, **caractérisé en ce que** la lèvre de serrage (57) est munie d'une interruption divisant la surface de serrage en au moins deux surfaces partielles de serrage séparées l'une de l'autre.

10. Plaquette de coupe (1) comportant :
- au moins une arête coupante déterminée de manière géométrique,
- une forme de base angulaire, avec des arêtes de bord (7A, 7B, 7C, 7D),
- une ligne médiane imaginaire (5A, 5B) divisant le côté avant (3) en deux moitiés, laquelle ligne médiane est perpendiculaire à deux arêtes de bord (7A, 7B, 7C, 7D),
- une première rainure de serrage (11) présentant au moins une première surface de serrage (13, 15) et un axe médian (17), et comprenant
- une deuxième rainure de serrage (19) présentant au moins une surface de serrage (21, 23), dont l'axe médian (25) s'étend orthogonalement à l'axe médian (17) de la première rainure de serrage (11),
- le centre (26) des axes médians (17, 25) des rainures de serrage (11, 19) coïncidant avec le centre (26) de la ligne médiane (5A, 5B) de la plaquette de coupe (1),
**caractérisée en ce**
- **que** la plaquette de coupe (1) présente un côté avant (3) rectangulaire, et en ce
- **que** l'axe médian (17) de la première rainure de serrage (11) est incliné d'un angle (α) par rapport à la ligne médiane (5A), lequel est situé dans la plage de 10° à 20°.

11. Plaquette de coupe selon la revendication 10, **caractérisée en ce que** les rainures de serrage (11, 19) sont réalisées à symétrie ponctuelle par rapport au centre de la ligne médiane.

12. Plaquette de coupe selon la revendication 10 ou 11, **caractérisée en ce que** les rainures de serrage (11, 19) présentent respectivement au moins une, de préférence respectivement deux surfaces de serrage (13, 15, 21, 23) réalisées symétriquement par rapport à l'axe médian (17; 25) de la rainure de serrage (11, 19) respective.

13. Plaquette de coupe selon l'une quelconque des revendications précédentes 10 à 12, **caractérisée en ce qu'**au moins une des surfaces de serrage (13, 15, 21, 23), par rapport au côté avant (3) de préférence plan, décroit d'un angle qui est situé dans la plage de 10° à 15°.

14. Plaquette de coupe selon l'une quelconque des revendications précédentes 10 à 13, **caractérisée en ce que** l'axe médian (17) de la première rainure de serrage (11) est incliné d'un angle (α) par rapport à la ligne médiane (5A), lequel est de 15°.

15. Procédé de réglage du diamètre d'usinage d'un alésoir selon l'une quelconque des revendications 1 à 9, comportant les étapes suivantes :
- insertion de la plaquette de coupe dans le siège de plaquette,
- serrage de la vis de serrage jusqu'à ce que la plaquette de coupe, avec une force de précontrainte définie, soit appuyée sans jeu contre la première et contre la deuxième surfaces latérales, et
- déplacement de la pièce d'ajustage par coulissement pratiquement radial de la plaquette de coupe le long de la première surface latérale du siège de plaquette en la position radiale correspondant au diamètre souhaité de l'alésoir.
